(19) Europäisches Patentamt
European Patent Office
Office européen des brevets

(11) Publication number: **0 255 693 B1**

(12) # EUROPEAN PATENT SPECIFICATION

(45) Date of publication of patent specification: **10.11.93**

(51) Int. Cl.5: **C08K 5/52**, C08L 23/12, C08L 53/00

(21) Application number: **87110989.8**

(22) Date of filing: **29.07.87**

The file contains technical information submitted after the application was filed and not included in this specification

(54) **High stiffness propylene polymer compositions.**

(30) Priority: **01.08.86 JP 181546/86**
**01.08.86 JP 181547/86**

(43) Date of publication of application:
**10.02.88 Bulletin 88/06**

(45) Publication of the grant of the patent:
**10.11.93 Bulletin 93/45**

(84) Designated Contracting States:
**BE DE FR GB**

(56) References cited:
**EP-A- 0 068 326**
**EP-A- 0 094 818**
**GB-A- 2 124 240**

**CHEMICAL ABSTRACTS, vol. 102, no. 16, 22nd April 1985, page 39, abstract no. 133003z, Columbus, Ohio, US; JP-A-59 184 252 (ADEKA ARGUS CHEMICAL CO. LTD) 19-10-1984**

(73) Proprietor: **Chisso Corporation**
**6-32, Nakanoshima 3-chome**
**Kita-ku**
**Osaka-shi Osaka-fu(JP)**

(72) Inventor: **Nakazima, Hirokazu**
**17, Higashi 2-chome**
**Tatsumidai**
**Ichihara-shi Chiba(JP)**

(74) Representative: **Hansen, Bernd, Dr.rer.nat. et al**
**Hoffmann, Eitle & Partner,**
**Patentanwälte,**
**Postfach 81 04 20**
**D-81904 München (DE)**

EP 0 255 693 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### FIELD OF THE INVENTION

The present invention relates to high stiffness propylene polymer compositions and, more particularly, to high stiffness propylene polymer compositions which are excellent in stiffness and heat distortion resistance.

### BACKGROUND OF THE INVENTION

Propylene polymers generally have excellent moldability, chemical resistance, and electrical and mechanical properties, and thus are used in various applications in the form of injection molded articles, blow molded articles, films, sheets, and fibers. In some applications, however, the propylene polymers are limited in their use because they fail to have satisfactory properties as required in the applications. In particular, with regard to stiffness such as stiffness and heat distortion resistance, the propylene polymers are inferior to a polystyrene, an ABS resin, and a polyethylene terephthalate ester; that is, these poor stiffness and heat distortion resistance constitute a serious hindrance to use of the propylene polymers in extended applications. Increasing stiffness produces various advantages. For example, the thickness of walls of molded articles can be decreased, and thus natural resources can be saved. Moreover, since the cooling time at the time of molding is reduced, a molding rate per unit time can be increased and thus productivity can be increased.

Propylene polymers have a problem in that they are unsuitable for use in production of molded articles which are readily subject to mechanical impact or are used at low temperatures, because their impact resistance is not sufficiently high. In general, it is quite difficult for plastic materials to be satisfactory in both stiffness such as stiffness and heat distortion resistance and high impact resistance; that is, stiffness and high impact resistance are in a contradictory relation and are quite difficult to improve them at the same time.

Several attempts to increase the high impact resistance of propylene polymers have been made. In particular, so-called ethylene-propylene block copolymers obtained by block copolymerizing propylene and ethylene are well known. These ethylene-propylene block copolymers, however, have a problem in that the stiffness is decreased although the low temperature impact resistance is greatly increased, as compared with propylene homopolymers.

In propylene polymers, therefore, various nucleating agents have hitherto been used alone or in combination with each other for the purpose of increasing the stiffness.

Japanese Patent Application (OPI) Nos. 104905/83, 104906/83, 104907/83 and 22913/84 (the term "OPI" as used herein refers to a "published unexamined Japanese patent application") disclose propylene homopolymers having a specified isotactic pentad ratio (hereafter referred to as "specified propylene homopolymers"). Japanese Patent Application (OPI) No. 201816/83 discloses ethylene-propylene block copolymers having a specified isotactic pentad ratio (hereafter referred to as "specified ethylene-propylene block copolymers"). These Japanese patent application (OPI)'s also disclose that for the purpose of more increasing the stiffness, organic nucleating agents such as aluminum p-tert-butylbenzoate or 1•3, 2•4-dibenzylidene sorbitol, are compounded to the specified propylene homopolymers or ethylene-propylene block copolymers (hereafter generally referred to as "specified propylene polymers").

Propylene polymer compositions as prepared by compounding various known nucleating agents to the usual propylene polymers are not sufficiently improved and thus are not sufficiently satisfactory in the stiffness.

The specified propylene homopolymers disclosed in Japanese Patent Application (OPI) Nos. 104905/83, 104906/83, 104907/83 and 22913/84, and the specified ethylene-propylene block copolymers disclosed in Japanese Patent Application (OPI) No. 201816/83 are not sufficiently satisfactory although considerably improved in the stiffness. The propylene polymer compositions as prepared by compounding aluminum p-tert-butylbenzoate or 1•3, 2•4-dibenzylidene sorbitol to the above specified propylene polymers are considerably improved in the stiffness, but are not sufficiently satisfactory for use in applications where high stiffness and high heat distortion resistance are needed.

### SUMMARY OF THE INVENTION

The present invention is intended to overcome the above problem in stiffness of propylene polymer compositions as prepared by compounding various types of nucleating agents and it has been found that

the problem can be solved by compounding phosphate compounds represented by the general formula (I):

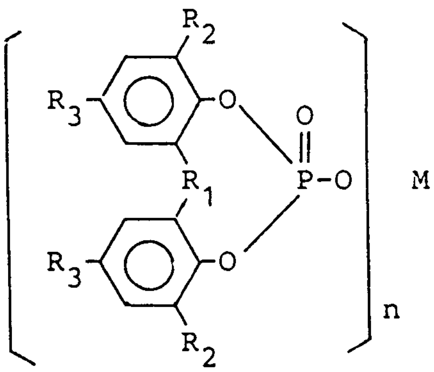

(I)

(wherein $R_1$ is a single bond, a sulfur atom or an alkylidene group having 1 to 4 carbon atoms, $R_2$ and $R_3$, which may be the same or different, each is a hydrogen atom or an alkyl group having 1 to 8 carbon atoms, M is a mono- to trivalent metal atom, and n is an integer of 1 to 3) to the specified propylene polymers. The phosphate compounds represented by the general formula (I) are hereafter referred to as "Compound A".

As is apparent from the above description, an object of the present invention is to provide propylene polymer compositions which are excellent in stiffness and heat distortion resistance, and ethylene-propylene block copolymer compositions which are excellent in stiffness, heat distortion resistance and high impact resistance.

## DETAILED DESCRIPTION OF THE INVENTION

The first embodiment of the present invention is as follows:

A high stiffness propylene polymer composition comprising 100 parts by weight of crystalline propylene homopolymers, the relation between isotactic pentad ratio (P) and melt flow rate (MFR) being $1.00 \geqq P \geqq 0.015 \log MFR + 0.955$, and the isotactic pentad ratios of extracts as obtained by successively extracting with boiling n-hexane and boiling n-heptane being, respectively, 0.450 to 0.700 and 0.750 to 0.930, and 0.01 to 1 part by weight of a phosphate compound represented by the general formula (I):

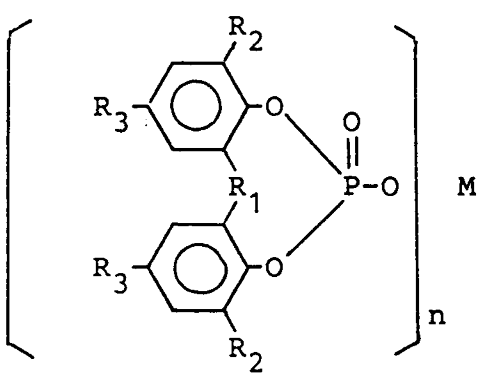

(I)

wherein $R_1$ is a single bond, a sulfur atom or an alkylidene group having 1 to 4 carbon atoms, preferably a methylene group, $R_2$ and $R_3$, which may be the same or different, each is a hydrogen atom or an alkyl group having 1 to 8 carbon atoms, preferably a tert-butyl group, M is a mono- to trivalent metal atom, and n is an integer of 1 to 3.

The specified propylene homopolymers used in the first embodiment of the present invention are crystalline propylene homopolymers in which the relation between isotactic pentad ratio (P) and melt flow rate (MFR) is such that $1.00 \geqq P \geqq 0.015 \log MFR + 0.955$, and the isotactic pentad ratios (P) of extracts as obtained by successively extracting with boiling n-hexane and boiling n-heptane are, respectively, 0.450 to 0.700 and 0.750 to 0.930.

The specified propylene homopolymers can be prepared by the method disclosed by the present applicant as described in Japanese Patent Application (OPI) No. 104907/83. That is, the specified propylene homopolymers can be produced by polymerizing propylene in the presence of a catalyst comprising a solid product (II), an organic aluminum compound and aromatic carboxylic acid ester (III), with the molar ratio of the aromatic carboxylic acid ester (III) to the solid product (II) [(III)/(II)] being 0.2/1 to 10.0/1, said solid product (II) being prepared by reacting an organic aluminum compound or a reaction product of an organic aluminum compound and an electron donor with titanium tetrachloride to form a solid product (I), and further reacting an electron donor and an electron acceptor with the solid product (I).

The second embodiment of the present invention is as follows:

A high stiffness propylene polymer composition comprising 100 parts by weight of crystalline ethylene-propylene block copolymers obtained by block copolymerizing 70 to 95% by weight, based on the total weight of the block copolymers, of propylene homopolymers obtained by polymerizing propylene at the first stage, having a relation between isotactic pentad ratio (P) and melt flow rate (MFR) of $1.00 \geqq P \geqq 0.015 \log MFR + 0.955$, and 5 to 30% by weight, based on the total weight of the block copolymers, of ethylene, ethylene and propylene, ethylene, propylene and other $\alpha$-olefins or propylene and other $\alpha$-olefins from which ethylene has been removed as much as possible at one or more stages, the ethylene content being 3 to 20% by weight based on the total weight of the block copolymers, and 0.01 to 1 part by weight of a phosphate compound represented by the general formula (I):

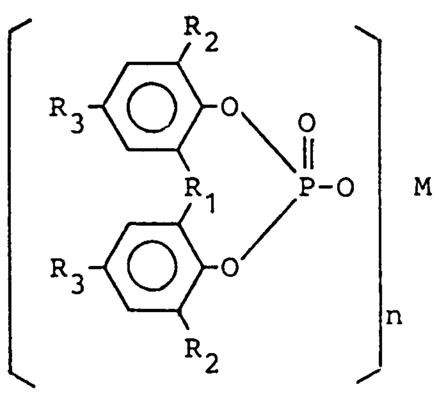

(I)

wherein $R_1$ is a single bond, a sulfur atom or an alkylidene group having 1 to 4 carbon atoms, preferably a methylene group, $R_2$ and $R_3$, which may be the same or different, each is a hydrogen atom or an alkyl group having 1 to 8 carbon atoms, preferably a tert-butyl group, M is a mono- to trivalent metal atom, and n is an integer of 1 to 3.

In the specified ethylene-propylene block copolymers used in the second embodiment of the present invention, the propylene homopolymers obtained by polymerizing propylene at the first stage have a relation between isotactic pentad ratio (P) and melt flow rate (MFR) of $1.00 \geqq P \geqq 0.015 \log MFR + 0.955$. As MFR is higher, P tends to be higher. MFR is usually 0.05 to 100. In the polymerization of the first stage, propylene in an amount of 70 to 95% by weight based on the total weight of the block copolymers (excluding polymers soluble in the polymerization solvent) is polymerized. At the second stage or subsequent stages, ethylene, ethylene and propylene, ethylene, propylene and other $\alpha$-olefins or propylene and other $\alpha$-olefins from which ethylene has been removed as much as possible are block copolymerized with the propylene homopolymer obtained in the polymerization of the first stage at one or more stages. One stage as used herein means one division of the operation that the monomer is supplied continuously or intermittently. At the second stage or subsequent stages, ethylene, ethylene and propylene, ethylene, propylene and other $\alpha$-olefins or propylene and other $\alpha$-olefins from which ethylene has been removed as much as possible in an amount of 5 to 30% by weight based on the total weight of the block copolymers are block copolymerized with the propylene homopolymer obtained in the polymerization of the first stage at one or more stages. The ethylene content of the final block copolymers (excluding soluble polymers dissolved in the polymerization solvent) should be within the range of 3 to 20% by weight based on the total weight of the block copolymers. Accordingly, when only propylene is polymerized at the first stage in an amount of 70% by weight based on the total weight of the block copolymers, since the amount of ethylene to be block copolymerized at the second stage is limited to 20% by weight or less based on the total weight of the block copolymers, the residual 10 to 27% by weight portion must be obtained by block

copolymerizing propylene or propylene and other α-olefins from which ethylene has been removed as much as possible. However, if propylene is polymerized at the first stage in an amount of 80% by weight based on the total weight of the block copolymers, it is possible that only ethylene is block copolymerized at the second stage in an amount of 20% by weight based on the total weight of the block copolymers. As long as the requirements that ethylene is block copolymerized at the specified stage and the ethylene content of the final block copolymers is limited to the specified range are satisfied, ethylene can be polymerized alone or in combination with propylene or propylene and other α-olefins from which ethylene has been removed as much as possible at one stage or two or more stages to produce the block copolymers of the present invention.

These specified ethylene-propylene block copolymers can be produced by the method disclosed by the present applicant as described in Japanese Patent Application (OPI) No. 201816/83. That is, propylene in an amount of 70 to 95% by weight based on the total weight of the block copolymers is polymerized in the presence of a catalyst comprising a solid product (V), an organic aluminum compound and aromatic carboxylic acid ester (VI), with the molar ratio of the aromatic carboxylic acid ester (VI) to the solid product (V) [(VI)/(V)] being 0.1/1 to 10.0/1, said solid product (V) being produced by reacting an organic aluminum compound or a reaction product of an organic aluminum compound and an electron donor with titanium tetrachloride to form a solid product (IV), and further reacting an electron donor and an electron acceptor with the solid product (IV). Then, ethylene, ethylene and propylene, ethylene, propylene and other α-olefins, or propylene and other α-olefins from which ethylene has been removed as much as possible in an amount of 5 to 30% by weight based on the total weight of block copolymers is copolymerized with the propylene homopolymers obtained in the above polymerization at one or more stages in such a manner than the ethylene content is 3 to 20% by weight based on the total weight of block copolymers.

The isotactic pentad ratio means an isotactic ratio in pentad unit of the propylene polymer molecular chain as determined by the method described in Macromolecules, Vol. 6, No. 6, November-December, 925-926 (1973), that is, using $^{13}$C-NMR. In other words, the ratio means a fraction of propylene monomer units in which five propylene monomer units are continuously subjected to isotactic linkage. Assignment of spectrum peaks as measured using the above $^{13}$C-NMR is made by the method described in Macromolecules, Vol. 8, No. 5, September-October, 687-689 (1975). In the examples as described hereinafter, the measurement using the $^{13}$C-NMR is made by the use of FT-NMR 270 MHz apparatus and based on the integrating measurement of 27,000 times, and in the condition that the signal detection limit is increased to 0.001 in terms of the isotactic pentad ratio.

In the first embodiment of the present invention, the requirement for the relation between isotactic pentad ratio (P) and melt flow rate (MFR) is made for the reason that as the MFR of propylene homopolymers is lower, the above ratio P of the propylene homopolymers is more decreased and hence it is necessary to determine the lower limit of P corresponding to MFR. Since P is a ratio, its upper limit is 1.00.

The boiling n-hexane extract is usually contained in the propylene homopolymers in the proportion of several percents (%). The ratio P, however, greatly varies, for example, from 0.10 to 0.70, depending on the process for polymerization of propylene. The propylene homopolymers to be used in the first embodiment of the present invention should be such that P of the boiling n-hexane extract is within the range of 0.450 to 0.700. In a composition using homopolymers in which P of the extract is less than 0.450, stiffness is improved, but heat distortion resistance is improved only insufficiently. The ratio P of the boiling n-heptane continuous extract is the isotactic pentad ratio of an extract resulting from the extraction with boiling n-heptane of the residue after the extraction with the above boiling n-hexane. With regard to the propylene homopolymers to be used in the first embodiment of the present invention, P of the boiling n-heptane extract should be within the range of 0.750 to 0.930. In a composition containing homopolymers in which P of the boiling n-heptane extract is less than 0.750, the stiffness is improved while on the other hand the heat distortion resistance is improved only insufficiently. The total amount of the boiling n-hexane extract and the boiling n-heptane successive extract is not critical. The total amount of the starting materials, propylene homopolymers, is, in fact, often in the range of 1.0 to 10.0% by weight. With the propylene homopolymer within the above range, better results can be obtained than with that outside the range. The above successive extraction is carried out as follows. A small amount of an antioxidant (e.g., 0.1% by weight of 2,6-di-tert-butyl-p-cresol) is mixed with a powdered propylene homopolymer and pelletized by the use of an extruder. These pellets were ground by the use of a grinder and passed through a screen of 20 mesh (Tyler). 3 g of the powder passed through the screen is placed in a Soxhlet extractor. The powder was extracted with 100 mℓ of boiling n-hexane and then with 100 mℓ of boiling n-heptane for 6 hours in each case. A soluble material was precipitated by adding a poor solvent such as methanol, absolute ethanol or acetone to each extract. The precipitate was isolated, dried and weighed.

MFR was measured according to JIS K 7210 at a temperature of 230 °C and under a load of 2.16 kg.

The ethylene content of the specified ethylene-propylene block copolymers to be used in the second embodiment of the present invention is determined by the infrared absorption spectrum method.

The specified propylene polymers to be used in the present invention can be used in admixture with crystalline random copolymers or crystalline block copolymers of propylene and one or more $\alpha$-olefins such as ethylene, butene-1, pentene-1, 4-methyl-pentene-1, hexene-1 and octene-1; a propylene-ethyl acetate copolymer, a propylene-acrylate copolymer or their saponified products; a propylene-unsaturated carboxylic acid or its anhydride copolymer, or a reaction product of the above copolymer and a metal ion compound; or a modified propylene polymer derived by modifying a propylene polymer with unsaturated carboxylic acid or its derivatives. In addition, the specified propylene polymers can be used in admixture with various synthetic rubbers (e.g., ethylene-propylene copolymer rubber, ethylene-propylene-unconjugated diene copolymer rubber, polybutadiene, polyisoprene, chlorinated polyethylene, chlorinated polypropylene, styrene-butadiene rubber, styrene-butadiene-styrene block copolymer, styrene-isoprene-styrene block copolymer, styrene-ethylene-butylene-styrene block copolymer and styrene-propylene-butylene-styrene block copolymer) or thermoplastic synthetic resins (e.g., polyolefins excluding propylene polymers, such as polyethylene, polybutene and poly(4-methylpentene-1), polystyrene, a styrene-acrylonitrile copolymer, an acrylonitrile-butadiene-styrene copolymer, polyamide, polyethylene terephthalate, polybutylene terephthalate and polyvinyl chloride). In addition, for the specified ethylene-propylene block copolymers to be used in the present invention, crystalline propylene homopolymer can be used in combination. Use of the specified propylene homopolymers of the first embodiment of the present invention as the above crystalline propylene homopolymer is particularly preferred since the effectiveness of the present invention is notably exhibited thereby. The above mixture can be used in the first embodiment of the present invention as long as the mixture satisfies the requirements of $1.00 \geqq P \geqq 0.015 \log MFR + 0.955$, and P's of the extracts as obtained by extracting the mixture with boiling n-hexane and boiling n-heptane are, respectively, 0.450 to 0.700 and 0.750 to 0.930.

Examples of the compound A to be used in the present invention are sodium 2,2′-methylene-bis(4,6-di-tert-butylphenyl)phosphate, sodium 2,2′-ethylidene-bis(4,6-di-tert-butylphenyl)phosphate, lithium 2,2′-methylene-bis(4,6-di-tert-butylphenyl)phosphate, lithium 2,2′-ethylidene-bis(4,6-di-tert-butylphenyl)-phosphate, sodium 2,2′-ethylidene-bis(4-isopropyl-6-tert-butylphenyl)phosphate, lithium 2,2′-methylene-bis-(4-methyl-6-tert-butylphenyl)phosphate, lithium 2,2′-methylene-bis(4-ethyl-6-tert-butylphenyl)phosphate, calcium bis[2,2′-thiobis(4-methyl-6-tert-butylphenyl)phosphate], calcium bis[2,2′-thiobis(4-ethyl-6-tert-butylphenyl)phosphate],calcium bis[2,2′-thiobis(4,6-di-tert-butylphenyl)phosphate],magnesium bis[2,2′-thiobis(4,6-di-tert-butylphenyl)phosphate], magnesium bis[2,2′-thiobis(4-tert-octylphenyl)phosphate], sodium 2,2′-butylidene-bis(4,6-di-methylphenyl)phosphate, sodium 2,2′-butylidene-bis(4,6-di-tert-butylphenyl)phosphate, sodium 2,2′-tert-octylmethylene-bis(4,6-dimethylphenyl)phosphate, sodium 2,2′-tert-octylmethylene-bis(4,6-di-tert-butylphenyl)phosphate, calcium bis[2,2′-methylene-bis(4,6-di-tert-butylphenyl)phosphate], magnesium bis[2,2′-methylene-bis(4,6-di-tert-butylphenyl)phosphate], barium bis[2,2′-methylene-bis(4,6-di-tert-butylphenyl)phosphate], sodium 2,2′-methylene-bis(4-methyl-6-tert-butylphenyl)phosphate, sodium 2,2′-methylene-bis(4-ethyl-6-tert-butylphenyl)phosphate, sodium (4,4′-dimethyl-6,6′-di-tert-butyl-2,2′-bisphenyl)-phosphate, calcium bis[(4,4′-dimethyl-6,6′-di-tert-butyl-2,2′-biphenyl)phosphate], sodium 2,2′-ethylidene-bis-(4-sec-butyl-6-tert-butylphenyl)phosphate, sodium 2,2′-methylene-bis(4,6-dimethylphenyl)phosphate, sodium 2,2′-methylene-bis(4,6-diethylphenyl)phosphate, potassium 2,2′-ethylidene-bis(4,6-di-tert-butylphenyl)-phosphate, calcium bis[2,2′-ethylidene-bis(4,6-di-tert-butylphenyl)phosphate], magnesium bis[2,2′-ethylidene-bis(4,6-di-tert-butylphenyl)phosphate], barium bis[2,2′-ethylidene-bis(4,6-di-tert-butylphenyl)-phosphate], aluminum tris(2,2′-methylene-bis(4,6-di-tert-butylphenyl)phosphate, and aluminum tris[2,2′-ethylidene-bis(4,6-di-tert-butylphenyl)phosphate]. In particular, sodium 2,2′-methylene-bis(4,6-di-tert-butylphenyl)phosphate is preferred. The amount of the compound A compounded is 0.01 to 1 part by weight, preferably 0.05 to 0.5 part by weight per 100 parts by weight of the specified propylene polymers to be used in the present invention. If it is less than 0.01 part by weight, the effect of improving stiffness and heat distortion resistance is exhibited only insufficiently. Although the compound A can be added in excess of 1 part by weight, no additional improvement can be expected. Thus, the addition of the compound A in excess of 1 part by weight is unsuitable in practical use and is uneconomical.

In the compositions of the present invention, various additives which are usually added to propylene polymers, such as phenol-, thioether- or phosphorus-based antioxidants, light stabilizers, clarifiers, nucleating agents, lubricants, antistatic agents, anti-fogging agents, antiblocking agents, antidripping agents, pigments, metal deactivators (copper deactivators), radical generators such as peroxides, dispersants of metal soaps, neutralizing agents, inorganic fillers (e.g., talc, mica, clay, wollastonite, zeolite, asbestos, calcium carbonate, aluminum hydroxide, magnesium hydroxide, barium sulfate, calcium silicate, glass fiber,

carbon fiber and potassium titanate), the above inorganic fillers subjected to surface treatment using coupling agents (e.g., silane-, titanate-, boron-, aluminate- and zircoaluminate-based), and organic fillers (e.g., wood flour, pulp, chip of used paper, synthetic fibers and natural fibers) can be used in combination within the range that does not deteriorate the effect of the present invention. It is particularly preferred to use inorganic fillers in combination, because they increase stiffness and heat distortion resistance. In particular, in the present invention, it is particularly preferred to use talc as the inorganic filler. The amount of talc added is preferably 3.5 to 25 parts by weight, more preferably 5.0 to 20 parts by weight, per 100 parts by weight of the specified propylene polymers. The average particle size of talc is preferably not more than 5 $\mu$.

The compositions of the present invention can be prepared by mixing the specified propylene polymers with the compound A and additives which are usually added to propylene polymers by the use of usual mixers, such as Henschel Mixer (trade name), super mixer, ribbon blender and Banbury mixer, and melt kneading and pelletizing the resulting mixture at a melt kneading temperature of 170 to 300 °C, preferably 200 to 250 °C by the use of usual single screw extruder, twin screw extruder, Brabender Plastograph or roll mills. The compositions thus obtained can be molded into the desired molded articles by the use of various molding techniques such as injection molding, extrusion molding and blow molding.

It is generally known as described in Japanese Patent Application (OPI) No. 1736/83 that the phosphate compounds indicated by the compound A in the present invention act as nucleating agents to improve stiffness and heat distortion resistance. The compound A, however, when compounded to the specified propylene polymers of the present invention, exhibits the synergistic effect that could not be expected at all from compounding of known nucleating agents, and provides compositions which are greatly excellent in stiffness and heat distortion resistance.

The compositions of the present invention are, in comparison with the conventional propylene polymer compositions with various nucleating agents, (1) greatly excellent in stiffness and heat distortion resistance. (2) Since the thickness of molded articles can be decreased, not only natural resources can be saved but also the cooling time at the time of molding can be reduced and, therefore, the molding rate per unit time can be increased, which contributes to an increase in productivity. (3) Polypropylene resins can be used in applications where polystyrene, ABS resins, polyethylene terephthalate esters, etc., have been hitherto used and thus applications of the polypropylene resins can be extended.

The present invention will be explained in greater detail with reference to the following examples,

The testing methods used in Examples and Comparative Examples are as follows:

(1) Stiffness

A test specimen (length: 100 mm; width: 10 mm; thickness: 4 mm) was produced by injection molding using the pellets obtained. The flexural modulus of the test specimen was measured according to JIS K 7203. Based on the flexural modulus, the stiffness was evaluated.

(2) Heat Distortion Resistance

A test specimen (length: 130 mm; width: 13 mm; thickness: 6.5 mm) was produced by injection molding using the pellets obtained. The heat distortion temperature of the test specimen was measured according to JIS K 7207 (load: 4.6 $kgf/cm^2$. Based on the heat distortion temperature, the heat distortion resistance was evaluated.

(3) High Impact Resistance

A notched test specimen (length: 63.5 mm; width: 13 mm; thickness: 3.5 mm) was produced by injection molding using pellets obtained. The Izod impact strength of the test specimen was measured at -30 °C according to JIS K 7110. Based on the Izod impact strength, the high impact resistance was evaluated.

EXAMPLES 1 TO 3 AND COMPARATIVE EXAMPLES 1 TO 10

To 100 parts by weight of powdered crystalline propylene homopolymers having MFR and an isotactic pentad ratio as shown in Table 1 were added sodium 2,2′-methylene-bis(4,6-di-tert-butylphenyl)phosphate as the compound A and other additives in the proportions shown in Table 1. They were mixed for 3 minutes in a Henschel mixer (trade name), and then melt kneaded at 200 °C and pelletized by the use of a single

screw extruder having a diameter of 40 mm.

In Comparative Examples 1 to 10, predetermined amounts of additives shown in Table 1 were added to 100 parts by weight of powdered crystalline propylene homopolymers having MFR and an isotactic pentad ratio as shown in Table 1, and then melt kneaded and pelletized in the same manner as in Examples 1 to 3.

The test specimen to be used in the testing of stiffness and heat distortion resistance was produced by injection molding the pellets at a resin temperature of 250 ° C and a mold temperature of 50 ° C.

The test specimen was measured for stiffness and heat distortion resistance by the testing methods as described above. The results are shown in Table 1.

EXAMPLES 4 TO 6 AND COMPARATIVE EXAMPLES 11 TO 20

To 100 parts by weight of powdered crystalline propylene homopolymers having MFR and an isotactic pentad ratio as shown in Table 2 were added sodium 2,2′-methylene-bis(4,6-di-tert-butylphenyl)phosphate as the Compound A, finely divided talc having an average particle size of 2 to 3 $\mu$ as the inorganic filler and other additives in the proportions shown in Table 2. They were mixed for 3 minutes by the use of a Henschel mixer (trade name), and then melt kneaded at 200 ° C and pelletized by the use of a single screw extruder having a diameter of 40 mm.

In Comparative Examples 11 to 20, predetermined amounts of additives as shown in Table 2 were added to 100 parts by weight of powdered crystalline propylene homopolymers having MFR and an isotactic pentad ratio as shown in Table 2, and then melt kneaded and pelletized in the same manner as in Examples 4 to 6.

The test specimen to be used in the testing of stiffness and heat distortion resistance was produced by injection molding the pellets obtained at a resin temperature of 250 ° C and a mold temperature of 50 ° C.

The test specimen was measured for stiffness and heat distortion resistance by the testing method as described above. The results are shown in Table 2.

EXAMPLES 7 TO 9 AND COMPARATIVE EXAMPLES 21 TO 30

To 100 parts by weight of powdered crystalline ethylene-propylene block copolymers having MFR and an isotactic pentad ratio and an ethylene content as shown in Table 3 were added sodium 2,2′-methylene-bis(4,6-di-tert-butylphenyl)phosphate as the compound A and other additives in the proportions shown in Table 3. They were mixed for 3 minutes by the use of a Henschel mixer (trade name), and then melt kneaded at 200 ° C and pelletized by the use of a single screw extruder having a diameter of 40 mm.

In Comparative Examples 21 to 30, predetermined amounts of additives as shown in Table 3 were added to 100 parts by weight of powdered crystalline ethylene-propylene block copolymers having MFR, an isotactic pentad ratio and an ethylene content as shown in Table 3, and then melt kneaded and pelletized in the same manner as in Examples 7 to 9.

The test specimen to be used in the testing of stiffness and heat distortion resistance was produced by injection molding the pellets obtained at a resin temperature of 250 ° C and a mold temperature of 50 ° C.

The test specimen was measured for stiffness, heat distortion resistance and high impact resistance by the testing methods as described above.

The results are shown in Table 3.

EXAMPLES 10 TO 12 AND COMPARATIVE EXAMPLES 31 TO 40

To 100 parts by weight of powdered crystalline ethylene-propylene block copolymers having MFR, an isotactic pentad ratio and an ethylene content as shown in Table 4 were added sodium 2,2′-methylene-bis-(4,6-di-tert-butylphenyl)phosphate as the compound A, finely divided talc having an average particle size of 2 to 3 $\mu$ as the inorganic filler and other additives in the proportions as shown in Table 4. They were mixed for 3 minutes by the use of a Henschel mixer (trade name), and then melt kneaded at 200 ° C and pelletized by the use of a single screw extruder having a diameter of 40 mm.

In Comparative Examples 31 to 40, predetermined amounts of additives as shown in Table 4 were added to 100 parts by weight of powdered crystalline ethylene-propylene copolymers having MFR, an isotactic pentad ratio and an ethylene content as shown in Table 4, and then melt kneaded and pelletized in the same manner as in Examples 10 to 12.

The test specimen to be used in the testing of stiffness, heat distortion resistance and high impact resistance was produced by injection molding the pellets obtained at a resin temperature of 250 ° C and a mold temperature of 50 ° C.

The test specimen was measured for stiffness, heat distortion resistance and high impact resistance by the testing methods as described above. The results are shown in Table 4.

The compounds and additives of the present invention as shown in Tables 1 to 4 are as follows:

Compound A:
: Sodium 2,2′-methylene-bis(4,6-di-tert-butylphenyl)phosphate(MARK NA-11 produced by Adeka Argas Co., Ltd.)

Nucleating Agent 1:
: Aluminum p-tert-butylbenzoate

Nucleating Agent 2:
: 1•3, 2•4-Dibenzylidene sorbitol

Nucleating Agent 3:
: Sodium bis(4-tert-butylphenyl)phosphate

Phenolic Antioxidant 1:
: 2,6-Di-tert-butyl-p-cresol

Phenolic Antioxidant 2:
: Tetrakis[methylene-3-(3′,5′-di-tert-butyl-4′-hydroxyphenyl)propionate]-methane

Phosphorus Antioxidant 1:
: Tetrakis(2,4-di-tert-butylphenyl)-4,4′-biphenylene-di-phosphonite

Phosphorus Antioxidant 2:
: Bis(2,4-di-tert-butylphenyl)pentaerythritol diphosphite

Ca-St:
: Calcium stearate

Inorganic Filler:
: Talc (average particle size: 2 to 3 μ)

TABLE 1

| | Examples | | | Comparative Examples | | | | | | | | | |
|---|---|---|---|---|---|---|---|---|---|---|---|---|---|
| | 1 | 2 | 3 | 1 | 2 | 3 | 4 | 5 | 6 | 7 | 8 | 9 | 10 |
| MFR (g/10 min) | 2.5 | 10.6 | 34.0 | 9.8 | 9.8 | 9.8 | 9.8 | 2.5 | 10.6 | 34.0 | 10.6 | 10.6 | 10.6 |
| Isotactic Pentad Ratio (P) | | | | | | | | | | | | | |
| Whole Polymer | 0.972 | 0.981 | 0.990 | 0.935 | 0.935 | 0.935 | 0.935 | 0.972 | 0.981 | 0.990 | 0.981 | 0.981 | 0.981 |
| Boiling n-Hexane Extract | 0.516 | 0.587 | 0.654 | 0.244 | 0.244 | 0.244 | 0.244 | 0.516 | 0.587 | 0.654 | 0.587 | 0.587 | 0.587 |
| Boiling n-Heptane Extract | 0.775 | 0.846 | 0.893 | 0.598 | 0.598 | 0.598 | 0.598 | 0.775 | 0.846 | 0.893 | 0.846 | 0.846 | 0.846 |
| Formulation (parts by weight)* | | | | | | | | | | | | | |
| Compound A | 0.1 | 0.1 | 0.1 | 0.1 | -- | -- | -- | -- | -- | -- | -- | -- | -- |
| Nucleating Agent 1 | -- | -- | -- | -- | 0.1 | -- | -- | -- | -- | -- | 0.1 | -- | -- |
| Nucleating Agent 2 | -- | -- | -- | -- | -- | 0.1 | -- | -- | -- | -- | -- | 0.1 | -- |
| Nucleating Agent 3 | -- | -- | -- | -- | -- | -- | 0.1 | -- | -- | -- | -- | -- | 0.1 |
| Phenolic Antioxidant 2 | 0.05 | 0.05 | 0.05 | 0.05 | 0.05 | 0.05 | 0.05 | 0.05 | 0.05 | 0.05 | 0.05 | 0.05 | 0.05 |
| Phosphorus Antioxidant 1 | 0.05 | 0.05 | 0.05 | 0.05 | 0.05 | 0.05 | 0.05 | 0.05 | 0.05 | 0.05 | 0.05 | 0.05 | 0.05 |
| Ca-St | 0.1 | 0.1 | 0.1 | 0.1 | 0.1 | 0.1 | 0.1 | 0.1 | 0.1 | 0.1 | 0.1 | 0.1 | 0.1 |
| Flexural Modulus × $10^4$ ($kgf/cm^2$) | 2.06 | 2.21 | 2.33 | 1.70 | 1.50 | 1.46 | 1.66 | 1.72 | 1.83 | 1.92 | 1.93 | 1.90 | 2.00 |
| Heat Distortion Temperature (°C) | 145 | 149 | 150 | 124 | 121 | 102 | 122 | 118 | 121 | 123 | 140 | 128 | 142 |

Note: * Parts by weight of additive per 100 parts by weight of the resin.

TABLE 2

| | Examples | | | Comparative Examples | | | | | | | | | |
|---|---|---|---|---|---|---|---|---|---|---|---|---|---|
| | 4 | 5 | 6 | 11 | 12 | 13 | 14 | 15 | 16 | 17 | 18 | 19 | 20 |
| MFR (g/10 min) | 2.5 | 10.6 | 34.0 | 9.8 | 9.8 | 9.8 | 9.8 | 2.5 | 10.6 | 34.0 | 10.6 | 10.6 | 10.6 |
| Isotactic Pentad Ratio (P) | | | | | | | | | | | | | |
| Whole Polymer | 0.972 | 0.981 | 0.990 | 0.935 | 0.935 | 0.935 | 0.935 | 0.972 | 0.981 | 0.990 | 0.981 | 0.981 | 0.981 |
| Boiling n-Hexane Extract | 0.516 | 0.587 | 0.654 | 0.244 | 0.244 | 0.244 | 0.244 | 0.516 | 0.587 | 0.654 | 0.587 | 0.587 | 0.587 |
| Boiling n-Heptane Extract | 0.775 | 0.846 | 0.893 | 0.598 | 0.598 | 0.598 | 0.598 | 0.775 | 0.846 | 0.893 | 0.846 | 0.846 | 0.846 |
| Formulation (parts by weight)* | | | | | | | | | | | | | |
| Compound A | 0.1 | 0.1 | 0.1 | 0.1 | -- | -- | -- | -- | -- | -- | -- | -- | -- |
| Nucleating Agent 1 | -- | -- | -- | -- | 0.1 | -- | -- | -- | -- | -- | 0.1 | -- | -- |
| Nucleating Agent 2 | -- | -- | -- | -- | -- | 0.1 | -- | -- | -- | -- | -- | 0.1 | -- |
| Nucleating Agent 3 | -- | -- | -- | -- | -- | -- | 0.1 | -- | -- | -- | -- | -- | 0.1 |
| Phenolic Antioxidant 1 | 0.1 | 0.1 | 0.1 | 0.1 | 0.1 | 0.1 | 0.1 | 0.1 | 0.1 | 0.1 | 0.1 | 0.1 | 0.1 |
| Phenolic Antioxidant 2 | 0.05 | 0.05 | 0.05 | 0.05 | 0.05 | 0.05 | 0.05 | 0.05 | 0.05 | 0.05 | 0.05 | 0.05 | 0.05 |
| Phosphorus Antioxidant 2 | 0.05 | 0.05 | 0.05 | 0.05 | 0.05 | 0.05 | 0.05 | 0.05 | 0.05 | 0.05 | 0.05 | 0.05 | 0.05 |
| Ca-St | 0.1 | 0.1 | 0.1 | 0.1 | 0.1 | 0.1 | 0.1 | 0.1 | 0.1 | 0.1 | 0.1 | 0.1 | 0.1 |
| Inorganic Filler | 10 | 10 | 10 | 10 | 10 | 10 | 10 | 10 | 10 | 10 | 10 | 10 | 10 |
| Flexural Modulus × $10^4$ ($kgf/cm^2$) | 2.83 | 3.04 | 3.20 | 2.34 | 2.06 | 2.01 | 2.28 | 2.36 | 2.52 | 2.65 | 2.65 | 2.61 | 2.74 |
| Heat Distortion Temperature (°C) | 159 | 161 | 162 | 136 | 130 | 109 | 130 | 126 | 129 | 131 | 148 | 136 | 153 |

Note: * Parts by weight of additive per 100 parts by weight of the resin.

TABLE 3

| | Examples | | | Comparative Examples | | | | | | | | | |
|---|---|---|---|---|---|---|---|---|---|---|---|---|---|
| | 7 | 8 | 9 | 21 | 22 | 23 | 24 | 25 | 26 | 27 | 28 | 29 | 30 |
| Propylene Homopolymer at First Stage | | | | | | | | | | | | | |
| MFR (g/10 min) | 11.5 | 19.0 | 26.0 | 18.5 | 18.5 | 18.5 | 18.5 | 11.5 | 19.0 | 26.0 | 19.0 | 19.0 | 19.0 |
| Isotactic Pentad Ratio (P) | 0.982 | 0.979 | 0.985 | 0.941 | 0.941 | 0.941 | 0.941 | 0.982 | 0.979 | 0.985 | 0.97 | 0.979 | 0.979 |
| Final Ethylene-Propylene Block Copolymer | | | | | | | | | | | | | |
| MFR (g/10 min) | 8.5 | 9.0 | 7.7 | 8.1 | 8.1 | 8.1 | 8.1 | 8.5 | 9.0 | 7.7 | 9.0 | 9.0 | 9.0 |
| $TC_2^=$ (%) *1 | 4.2 | 8.5 | 12.1 | 8.3 | 8.3 | 8.3 | 8.3 | 4.2 | 8.5 | 12.1 | 8.5 | 8.5 | 8.5 |
| $RCC_2^=$ (%) *2 | 62 | 60 | 62 | 62 | 62 | 62 | 62 | 62 | 60 | 62 | 60 | 60 | 60 |
| Formulation (parts by weight)* | | | | | | | | | | | | | |
| Compound A | 0.1 | 0.1 | 0.1 | 0.1 | -- | -- | -- | -- | -- | -- | -- | -- | -- |
| Nucleating Agent 1 | -- | -- | -- | -- | 0.1 | -- | -- | -- | -- | -- | 0.1 | -- | -- |
| Nucleating Agent 2 | -- | -- | -- | -- | -- | 0.1 | -- | -- | -- | -- | -- | 0.1 | -- |
| Nucleating Agent 3 | -- | -- | -- | -- | -- | -- | 0.1 | -- | -- | -- | -- | -- | 0.1 |
| Phenolic Antioxidant 2 | 0.05 | 0.05 | 0.05 | 0.05 | 0.05 | 0.05 | 0.05 | 0.05 | 0.05 | 0.05 | 0.05 | 0.05 | 0.05 |
| Phosphorus Antioxidant 1 | 0.05 | 0.05 | 0.05 | 0.05 | 0.05 | 0.05 | 0.05 | 0.05 | 0.05 | 0.05 | 0.05 | 0.05 | 0.05 |
| Ca-St | 0.1 | 0.1 | 0.1 | 0.1 | 0.1 | 0.1 | 0.1 | 0.1 | 0.1 | 0.1 | 0.1 | 0.1 | 0.1 |
| Flexural Modulus × $10^4$ (kgf/cm²) | 2.23 | 1.84 | 1.70 | 1.45 | 1.28 | 1.24 | 1.42 | 1.85 | 1.53 | 1.42 | 1.61 | 1.59 | 1.67 |
| Heat Distortion Temperature (°C) | 150 | 135 | 126 | 116 | 111 | 100 | 113 | 129 | 115 | 106 | 123 | 116 | 125 |
| Izod Impact Strength (kgf·cm/cm) | 5.5 | 8.3 | 12.8 | 8.1 | 7.3 | 8.4 | 8.0 | 5.6 | 8.4 | 12.8 | 7.8 | 8.6 | 8.0 |

Note:
* Parts by weight of additive per 100 parts by weight of the resin.
*1 Ethylene content of the whole polymer (wt%).
*2 Ethylene content of the polymer portion as obtained at the second stage (wt%).

TABLE 4

| Propylene Homopolymer at First Stage | Examples 10 | 11 | 12 | Comparative Examples 31 | 32 | 33 | 34 | 35 | 36 | 37 | 38 | 39 | 40 |
|---|---|---|---|---|---|---|---|---|---|---|---|---|---|
| MFR (g/10 min) | 11.5 | 19.0 | 26.0 | 18.5 | 18.5 | 18.5 | 18.5 | 11.5 | 19.0 | 26.0 | 19.0 | 19.0 | 19.0 |
| Isotactic Pentad Ratio (P) | 0.982 | 0.979 | 0.985 | 0.941 | 0.941 | 0.941 | 0.941 | 0.982 | 0.979 | 0.985 | 0.97 | 0.979 | 0.979 |
| Final Ethylene-Propylene Block Copolymer | | | | | | | | | | | | | |
| MFR (g/10 min) | 8.5 | 9.0 | 7.7 | 8.1 | 8.1 | 8.1 | 8.1 | 8.5 | 9.0 | 7.7 | 9.0 | 9.0 | 9.0 |
| $TC_2^=$ (%) *1 | 4.2 | 8.5 | 12.1 | 8.3 | 8.3 | 8.3 | 8.3 | 4.2 | 8.5 | 12.1 | 8.5 | 8.5 | 8.5 |
| $RCC_2^=$ (%) *2 | 62 | 60 | 62 | 62 | 62 | 62 | 62 | 62 | 60 | 62 | 60 | 60 | 60 |
| Formulation (parts by weight)* | | | | | | | | | | | | | |
| Compound A | 0.1 | 0.1 | 0.1 | 0.1 | -- | -- | -- | -- | -- | -- | -- | -- | -- |
| Nucleating Agent 1 | -- | -- | -- | -- | 0.1 | -- | -- | -- | -- | -- | 0.1 | -- | -- |
| Nucleating Agent 2 | -- | -- | -- | -- | -- | 0.1 | -- | -- | -- | -- | -- | 0.1 | -- |
| Nucleating Agent 3 | -- | -- | -- | -- | -- | -- | 0.1 | -- | -- | -- | -- | -- | 0.1 |
| Phenolic Antioxidant 1 | 0.1 | 0.1 | 0.1 | 0.1 | 0.1 | 0.1 | 0.1 | 0.1 | 0.1 | 0.1 | 0.1 | 0.1 | 0.1 |
| Phenolic Antioxidant 2 | 0.05 | 0.05 | 0.05 | 0.05 | 0.05 | 0.05 | 0.05 | 0.05 | 0.05 | 0.05 | 0.05 | 0.05 | 0.05 |
| Phosphorus Antioxidant 2 | 0.05 | 0.05 | 0.05 | 0.05 | 0.05 | 0.05 | 0.05 | 0.05 | 0.05 | 0.05 | 0.05 | 0.05 | 0.05 |
| Ca-St | 0.1 | 0.1 | 0.1 | 0.1 | 0.1 | 0.1 | 0.1 | 0.1 | 0.1 | 0.1 | 0.1 | 0.1 | 0.1 |
| Inorganic Filler | 10 | 10 | 10 | 10 | 10 | 10 | 10 | 10 | 10 | 10 | 10 | 10 | 10 |
| Flexural Modulus × $10^4$ ($kgf/cm^2$) | 3.15 | 2.60 | 2.40 | 2.05 | 1.80 | 1.75 | 2.00 | 2.61 | 2.16 | 2.00 | 2.25 | 2.22 | 2.36 |
| Heat Distortion Temperature (°C) | 158 | 148 | 138 | 126 | 121 | 110 | 121 | 139 | 125 | 115 | 134 | 123 | 135 |
| Izod Impact Strength (kgf·cm/cm) | 5.3 | 8.1 | 12.3 | 7.8 | 7.0 | 8.1 | 7.6 | 5.4 | 8.1 | 12.3 | 7.5 | 8.3 | 7.7 |

Note: * Parts by weight of additive per 100 parts by weight of the resin.

*1 Ethylene content of the whole polymer (wt%).

*2 Ethylene content of the polymer portion obtained at the second stage (wt%).

In the examples and comparative examples shown in Table 1, as the propylene polymer, crystalline propylene homopolymers having MFR and an isotactic pentad ratio as shown in Table 1 were used. As can be seen from Table 1, in Examples 1 to 3, the compound A was compounded to the crystalline propylene homopolymers having an isotactic pentad ratio falling within the scope of the present invention. By comparison of Examples 1 to 3 with Comparative Examples 1 to 4 (wherein the compound A and other nucleating agents were compounded to the crystalline propylene homopolymers having an isotactic pentad ratio not falling within the scope of the present invention), it can be seen that the compositions of Examples

1 to 3 are superior to those of Comparative Examples 1 to 4 in connection with stiffness and heat distortion resistance. By comparison of Examples 1 to 3 with Comparative Examples 5 to 7 (wherein no nucleating agent was added to the crystalline propylene homopolymers having an isotactic pentad ratio falling within the scope of the present invention), it can be seen that the compositions of Comparative Examples 5 to 7 are improved only insufficiently in stiffness and heat distortion resistance. By comparison of Examples 1 to 3 with Comparative Examples 8 to 10 (wherein the organic nucleating agents comprising compounds other than the compound A were compounded to the crystalline propylene homopolymers having an isotactic pentad ratio falling within the scope of the present invention), it can be seen that the compositions of Comparative Examples 8 to 10 are considerably improved with regard to stiffness and heat distortion resistance, but not sufficiently, and that the compositions of Examples 1 to 3 are remarkably superior in stiffness and heat distortion resistance to those of Comparative Examples 8 to 10; that is, the compound A produces the great synergistic effect. Increased stiffness and heat distortion resistance as obtained in the present invention can be said to be the specific effects obtained only when the crystalline propylene homopolymers having an isotactic pentad ratio falling within the specified range of the present invention are used together with the compound A.

Table 2 shows the results when to the propylene polymers used in Table 1 the compound A and talc as the inorganic filler were added in combination. From the results of Table 2, it can be seen that the same effects as above can be obtained.

In the examples and comparative examples shown in Table 3, as the propylene polymer, the crystalline ethylene-propylene block copolymers having MFR and an isotactic pentad ratio as shown in Table 3 were used. As can be seen from Table 3, in Examples 7 to 9 the compound A was compounded to the crystalline ethylene-propylene block copolymers having an isotactic pentad ratio falling within the scope of the present invention. By comparison of Examples 7 to 9 with Comparative Examples 21 to 24 (wherein the compound A and other nucleating agents were compounded to the crystalline ethylene-propylene block copolymers having an isotactic pentad ratio not falling within the scope of the present invention), it can be seen that the compositions of Examples 7 to 9 are superior in stiffness and heat distortion resistance to those of Comparative Examples 21 to 24. By comparison of Examples 7 to 9 with Comparative Examples 25 to 27 (wherein no organic nucleating agent was added to the crystalline ethylene-propylene block copolymers having an isotactic pentad ratio falling within the range of the present invention), it can be seen that the compositions of Comparative Examples 25 to 27 are not sufficiently improved in stiffness and heat distortion resistance. By comparison of Examples 7 to 9 with Comparative Examples 28 to 30 (wherein the organic nucleating agents comprising compounds other than the compound A were added to the crystalline ethylene-propylene block copolymers having an isotactic pentad ratio falling within the scope of the present invention), it can be seen that the compositions of Comparative Examples 28 to 30 are considerably improved in stiffness and heat distortion resistance, but not sufficiently, and that the compositions of Examples 7 to 9 are remarkably superior in stiffness and heat distortion resistance to those of Comparative Examples 28 to 30; that is, the compound A produces the great synergistic effects. That is, increased stiffness and heat distortion resistance as obtained by the present invention can be said to be the specific effects obtained only when the compound A is added to the crystalline ethylene-propylene block copolymers having an isotactic pentad ratio falling within the scope of the present invention. It is also observed that in Examples 7 to 9 illustrating the compositions of the present invention, even if the compound A is used, the reduction in high impact resistance accompanied by the increase in stiffness is not observed, and the high impact resistance is comparable to those of Comparative Examples 21 to 30.

Table 4 shows the results when to the propylene polymers used in Table 3 the compound A and talc as the inorganic filler were added in combination. In these cases, the same effects as above are observed.

It can be seen from the above data that the compositions of the present invention are excellent in stiffness and heat distortion resistance in comparison with the known compositions comprising the crystalline propylene polymers with nucleating agents compounded thereto; it has been observed that the compositions of the present invention have great effects.

While the invention has been described in detail and with reference to specific embodiments thereof, it will be apparent to one skilled in the art that various changes and modifications can be made.

## Claims

**1.** A propylene polymer composition comprising:

100 parts by weight of crystalline propylene homopolymers, the relation between isotactic pentad ratio (P) as measured using $^{13}C$-NMR and melt flow rate (MFR) measured according to JIS K 7210 at 230 °C being $1.00 \geqq P \geqq 0.015 \log MFR + 0.955$, the MFR being at least 0.05 g/10 min, and the

isotactic pentad ratios (P) of extracts obtained by successively extracting 3 g of a powder of the propylene homopolymer passed through a screen of 20 mesh (Tyler) with boiling n-hexane (100 ml) and boiling n-heptane (100 ml) for 6 hours in each case being, respectively, 0.450 to 0.700 and 0.750 to 0.930; and

0.01 to 1 part by weight of a phosphate compound represented by the general formula (I):

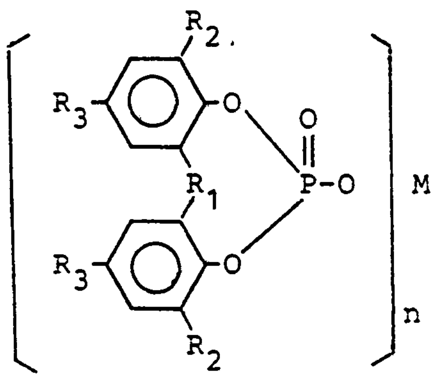

(I)

wherein $R_1$ is a single bond, a sulfur atom or an alkylidene group having 1 to 4 carbon atoms, $R_2$ and $R_3$, which may be the same or different, each is a hydrogen atom or an alkyl group having 1 to 8 carbon atoms, M is a mono- to trivalent metal atom, and n is an integer of 1 to 3.

**2.** The propylene polymer composition as claimed in Claim 1, wherein $R_1$ is a methylene group, and $R_2$ and $R_3$ each is a tert-butyl group.

**3.** The propylene polymer composition as claimed in Claim 1, wherein said phosphate compound is sodium 2,2'-methylene-bis(4,6-di-tert-butylphenyl)phosphate.

**4.** The propylene polymer composition as claimed in any one of Claims 1 to 3, wherein an inorganic filler is compounded.

**5.** The propylene polymer composition as claimed in Claim 4, wherein said inorganic filler is at least one compound selected from talc, mica, clay, wollastonite, zeolite, asbestos, calcium carbonate, aluminum hydroxide, magnesium hydroxide, barium sulfate, calcium silicate, glass fiber, carbon fiber and potassium titanate.

**6.** The propylene polymer composition as claimed in Claim 4, wherein said inorganic filler is talc.

**7.** The propylene polymer composition as claimed in Claim 6, wherein the amount of talc added is 3.5 to 25 parts by weight per 100 parts by weight of the crystalline propylene homopolymers.

**8.** The propylene polymer composition as claimed in Claim 6, wherein the amount of talc added is 5.0 to 20 parts by weight per 100 parts by weight of the crystalline propylene homopolymers.

**9.** The propylene polymer composition as claimed in any one of Claims 6 to 8, wherein the average particle size of the talc is not more than 5 $\mu$.

**10.** A propylene polymer composition comprising:

100 parts by weight of crystalline ethylene-propylene block copolymers obtained by block copolymerizing 70 to 95% by weight, based on the total weight of the block copolymers, of propylene homopolymers obtained by polymerizing propylene at the first stage, having a relation between isotactic pentad ratio (P) as measured using $^{13}C$-NMR and melt flow rate (MFR) measured according to JIS K 7210 at 230 °C of $1.00 \geq P \geq 0.015 \log MFR + 0.955$, the MFR being at least 0.05 g/10 min, and 5 to 30% by weight, based on the total weight of the block copolymers, of ethylene, ethylene and propylene, ethylene, propylene and other $\alpha$-olefins or propylene and other $\alpha$-olefins from which

ethylene has been removed at one or more stages, the ethylene content being 3 to 20% by weight based on the total weight of the block copolymers; and

0.01 to 1 part by weight of a phosphate compound represented by the general formula (I):

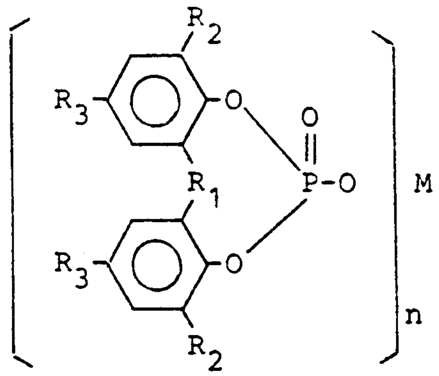

(I)

wherein $R_1$ is a single bond, a sulfur atom or an alkylidene group having 1 to 4 carbon atoms, $R_2$ and $R_3$, which may be the same or different, each is a hydrogen atom or an alkyl group having 1 to 8 carbon atoms, M is a mono- to trivalent metal atom, and n is an integer of 1 to 3.

**11.** The propylene polymer composition as claimed in Claim 10, wherein $R_1$ is a methylene group, and $R_2$ and $R_3$ each is a tert-butyl group.

**12.** The propylene polymer composition as claimed in Claim 10, wherein said phosphate compound is sodium 2,2'-methylene-bis(4,6-di-tert-butylphenyl)phosphate.

**13.** The propylene polymer composition as claimed in any one of Claims 10 to 12, wherein an inorganic filler is compounded.

**14.** The propylene polymer composition as claimed in Claim 13, wherein said inorganic filler is at least one compound selected from talc, mica, clay, wollastonite, zeolite, asbestos, calcium carbonate, aluminum hydroxide, magnesium hydroxide, barium sulfate, calcium silicate, glass fiber, carbon fiber and potassium titanate.

**15.** The propylene polymer composition as claimed in Claim 13, wherein said inorganic filler is talc.

**16.** The propylene polymer composition as claimed in Claim 15, wherein the amount of talc added is 3.5 to 25 parts by weight per 100 parts by weight of the crystalline ethylene-propylene block copolymers.

**17.** The propylene polymer composition as claimed in Claim 15, wherein the amount of talc added is 5.0 to 20 parts by weight per 100 parts by weight of the crystalline ethylene-propylene block copolymers.

**18.** The propylene polymer composition as claimed in any one of Claims 15 to 17, wherein the average particle size of the talc is not more than 5 $\mu$.

**Patentansprüche**

**1.** Propylenpolymerzusammensetzung, enthaltend:

100 Gew.Teile kristalline Propylenhomopolymere, wobei die Beziehung zwischen isotaktischem Pentade-Verhältnis (P), gemessen durch $^{13}C$-NMR, und Schmelzflußgeschwindigkeit (MFR), gemessen gemäß JIS K 7210 bei 230 °C, $1,00 \geqq P \geqq 0,015 \log MFR + 0,955$ gilt, wobei die MFR mindestens 0,05 g/10 min. beträgt, und wobei die isotaktischen Pentade-Verhältnisse (P) von Extrakten, die erhalten werden durch aufeinanderfolgende Extraktion von 3 g eines Pulvers des durch ein Sieb von 20 Mesh (Tyler) gesiebten Propylenhomopolymers mit siedendem n-Hexan (100 ml) und siedendem n-Heptan (100 ml) über 6 Stunden, jeweils 0,450 bis 0,700 bzw. 0,750 bis 0,930 betragen; sowie

0,01 bis 1 Gew.Teile einer Phosphatverbindung der allgemeinen Formel (I):

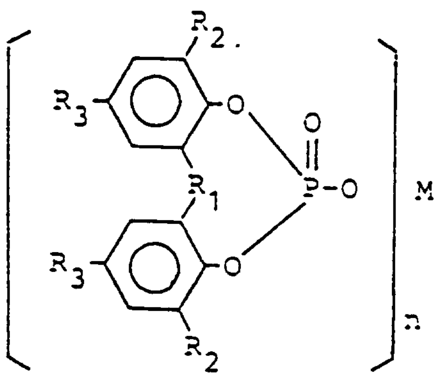

(I)

worin $R_1$ eine Einfachbindung, ein Schwefelatom oder eine Alkylidengruppe mit 1 bis 4 Kohlenstoffatomen, $R_2$ und $R_3$ , gleich oder verschieden, jeweils ein Wasserstoffatom oder eine Alkylgruppe mit 1 bis 8 Kohlenstoffatomen, M ein 1- bis 3-wertiges Metallatom und n eine ganze Zahl von 1 bis 3 sind.

**2.** Propylenpolymerzusammensetzung gemäß Anspruch 1, worin $R_1$ eine Methylen- und $R_2$ und $R_3$ jeweils eine t-Butylgruppe sind.

**3.** Propylenpolymerzusammensetzung gemäß Anspurch 1, worin die genannte Phosphatverbindung Natrium-2,2'-methylen-bis(4,6-di-t-butylphenyl)phosphat ist.

**4.** Propylenpolymerzusammensetzunggemäß jedem Anspruch 1 bis 3, worin ein anorganischer Füllstoff kompoundiert ist.

**5.** Propylenpolymerzusammensetzung gemäß Anspruch 4, worin der genannte anorganische Füllstoff mindestens eine Verbindung ist, ausgewählt aus Talk, Glimmer, Ton, Wollastonit, Zeolit, Asbest, Calciumcarbonat, Aluminiumhydroxid, Magnesiumhydroxid, Bariumsulfat, Calciumsilicat, Glasfaser, Kohlefaser und Kaliumtitanat.

**6.** Propylenpolymerzusammensetzung gemäß Anspruch 4, worin der genannte anorganische Füllstoff Talk ist.

**7.** Propylenpolymerzusammensetzung gemäß Anspruch 6, worin die Menge an zugefügtem Talk 3,5 bis 25 Gew.Teile pro 100 Gew.Teile kristalline Propylenhomopolymere beträgt.

**8.** Propylenpolymerzusammensetzung gemäß Anspruch 6, worin die Menge an zugefügtem Talk 5,0 bis 20 Gew.Teile pro 100 Gew.Teile kristalline Propylenhomopolymere beträgt.

**9.** Propylenpolymerzusammensetzung gemäß jedem Anspruch 6 bis 8, worin die Durchschnittspartikelgröße des Talks nicht mehr als 5$\mu$m beträgt.

**10.** Propylenpolymerzusammensetzung, enthaltend:
100 Gew.Teile kristalline Ethylen-Propylen-Blockcopolymere, erhältlich durch Blockcopolymerisation von 70 bis 95 Gew.%, bezogen auf Gesamtgewicht der Blockcopolymeren, von Propylenhomopolymer, erhältlich durch Polymerisation von Propylen in einer ersten Stufe, mit einer Beziehung zwischen isotaktischem Pentade-Verhältnis (P), gemessen durch $^{13}C$-NMR, und der Schmelzflußgeschwindigkeit (MFR), gemessen gemäß JIS K 7210 bei 230 °C, von $1{,}00 \geqq P \geqq 0{,}015 \log MFR + 0{,}955$, wobei die MFR mindestens 0,05 g/10 min beträgt, mit 5 bis 30 Gew.%, bezogen auf Gesamtgewicht der Blockcopolymeren, von Ethylen, Ethylen und Propylen, Ethylen, Propylen und weiteren $\alpha$-Olefinen oder Propylen und weiteren $\alpha$-Olefinen, aus denen Ethylen in einer oder mehreren Stufen entfernt worden ist, wobei der Ethylengehalt 3 bis 20 Gew.% beträgt, bezogen auf Gesamtgewicht der Blockcopolymeren; sowie
0,01 bis 1 Gew.Teile einer Phosphatverbindung der allgemeinen Formel (I):

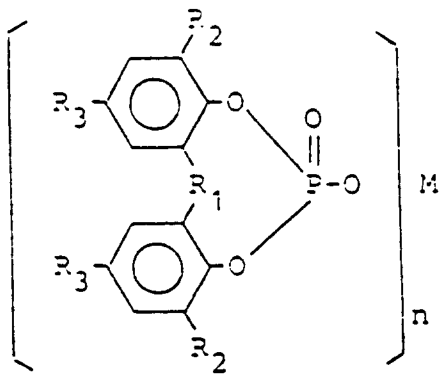

(I)

worin $R_1$ eine Einfachbindung, ein Schwefelatom oder eine Alkylidengruppe mit 1 bis 4 Kohlenstoffatomen, $R_2$ und $R_3$, gleich oder verschieden, jeweils ein Wasserstoffatom oder eine Alkylgruppe mit 1 bis 8 Kohlenstoffatomen, M ein 1- bis 3-wertiges Metallatom und n eine ganze Zahl von 1 bis 3 sind.

**11.** Propylenpolymerzusammensetzung gemäß Anspruch 10, worin $R_1$ eine Methylen- und $R_2$ und $R_3$ jeweils eine t-Butylgruppe sind.

**12.** Propylenpolymerzusammensetzung gemäß Anspruch 10, worin die genannte Phosphatverbindung Natrium-2,2'-methylen-bis(4,6-di-t-butylphenyl)phosphat ist.

**13.** Propylenpolymerzusammensetzung gemäß jedem Anspruch 10 bis 12, worin ein anorganischer Füllstoff kompoundiert ist.

**14.** Propylenpolymerzusammensetzung gemäß Anspruch 13, worin der genannte anorganische Füllstoff mindestens eine Verbindung ist, ausgewählt aus Talk, Glimmer, Ton, Wollastonit, Zeolit, Asbest, Calciumcarbonat, Aluminiumhydroxid, Magnesiumhydroxid, Bariumsulfat, Calciumsilicat, Glasfaser, Kohlefaser und Kaliumtitanat.

**15.** Propylenpolymerzusammenstzung gemäß Anspruch 13, worin der genannte anorganische Füllstoff Talk ist.

**16.** Propylenpolymerzusammensetzung gemäß Anspruch 15, worin die Menge an zugefügtem Talk 3,5 bis 25 Gew.Teile pro 100 Gew.Teile kristalline Ethylen-Propylen-Blockcopolymere beträgt.

**17.** Propylenpolymerzusammensetzung gemäß Anspruch 15, worin die Menge an zugefügtem Talk 5,0 bis 20 Gew.Teile pro 100 Gew.Teile kristalline Ethylen-Propylen-Blockcopolymere beträgt.

**18.** Propylenpolymerzusammensetzung gemäß jedem Anspruch 15 bis 17, worin die Durchschnittspartikelgröße des Talks nicht mehr als 5 $\mu$m beträgt.

## Revendications

**1.** Une composition d'un polymère de propylène qui comprend:

100 parties en poids d'homopolymères cristallins de propylène, la relation entre la proportion de pentade isotactique (P), mesurée par $^{13}$C-RMN et la vitesse d'écoulement à l'état fondu (VEF), mesurée selon la méthode JIS K 7210 à 230 °C, étant $1{,}00 \geqq P \geqq 0{,}015 \log VEF + 0{,}955$, la VEF étant au minimum égale à 0,05 g/10 min, et les proportions de pentade isotactique (P) d'extraits obtenus en extrayant successivement 3g d'une poudre de l'homopolymère de propylène, tamisée à 20 mesh (Tyler), dans du n-hexane (100 ml) et du n-heptane (100 ml) à ébullition pendant 6 heures dans chaque cas, étant respectivement 0,450 à 0,700 et 0,750 à 0,930; et

0,01 à 1 partie en poids d'un composé de phosphate représenté par la formule générale (I):

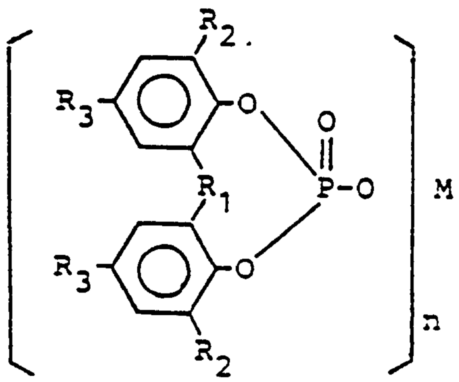

(I)

dans laquelle $R_1$ est une liaison simple, un atome de soufre ou un groupe alkylidène possédant de 1 à 4 atomes de carbone, $R_2$ et $R_3$, qui peuvent être identiques ou différents, représentent chacun un atome d'hydrogène ou un groupe alcoyle possédant de 1 à 8 atomes de carbone, M est un atome de métal mono-, di- ou trivalent, et n est un entier allant de 1 à 3.

**2.** La composition d'un polymère de propylène selon la Revendication 1, dans laquelle $R_1$ est un radical méthylène, et $R_2$ et $R_3$ sont chacun un radical tert-butyle.

**3.** La composition d'un polymère de propylène selon la Revendication 1, dans laquelle ledit composé de phosphate est le 2,2'-méthylène-bis(4,6-di-tert-butylphényle)phosphate de sodium.

**4.** La composition d'un polymère de propylène selon l'une quelconque des revendications 1 à 3, dans laquelle est incorporée une charge inorganique.

**5.** La composition d'un polymère de propylène selon la Revendication 4, dans laquelle ladite charge inorganique est au moins un des composés choisis parmi le talc, le mica, l'argile, la wollastonite, une zéolithe, l'amiante, le carbonate de calcium, l'hydroxyde d'aluminium, l'hydroxyde de magnésium, le sulfate de baryum, le silicate de calcium, la fibre de verre, la fibre de carbone et le titanate de potassium.

**6.** La composition d'un polymère de propylène selon la Revendication 4, dans laquelle ladite charge inorganique est du talc.

**7.** La composition d'un polymère de propylène selon la Revendication 6, dans laquelle la quantité de talc ajoutée est de 3,5 à 25 parties par 100 parties en poids des homopolymères cristallins de propylène.

**8.** La composition d'un polymère de propylène selon la Revendication 6, dans laquelle la quantité de talc ajoutée est de 5,0 à 20 parties par 100 parties en poids des homopolymères cristallins de propylène.

**9.** La composition d'un polymère de propylène selon l'une quelconque des revendications 6 à 8, dans laquelle la granulométrie moyenne des particules de talc n'est pas supérieure à 5$\mu$.

**10.** Une composition d'un polymère de propylène comprenant:

100 parties en poids de copolymères séquencés cristallins d'éthylène-propylène obtenus par copolymérisation séquencée de 70 à 95% en poids, sur la base du poids total des copolymères séquencés, d'homopolymères de propylène obtenus en premier par polymérisation du propylène, la proportion de pentade isotactique (P), mesurée par $^{13}$C-RMN étant liée à la vitesse d'écoulement à l'état fondu (VEF), mesurée selon la méthode JIS K 7210 à 230 °C, par la relation $1{,}00 \geqq P \geqq 0{,}015 \log VEF + 0{,}955$, la VEF étant au minimum égale à 0,05 g/10 min, et de 5 à 30% en poids, sur la base du poids total des copolymères séquencés, d'éthylène, d'éthylène et de propylène, d'éthylène, de propylène et d'autres $\alpha$-oléfines ou de propylène et d'autres $\alpha$-oléfines dont on a extrait l'éthylène en une ou plusieurs étapes, la teneur en éthylène étant de 3 à 20% en poids sur la base du poids total des copolymères séquencés; et

0,01 à 1 partie en poids d'un composé de phosphate représenté par la formule générale (I):

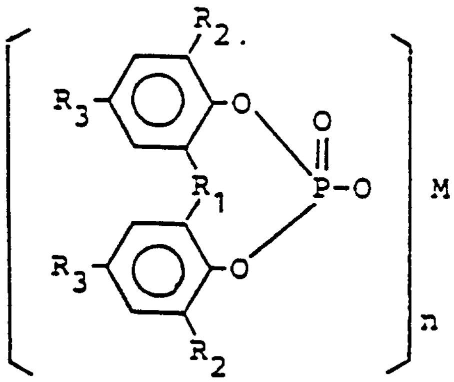

(I)

dans laquelle $R_1$ est une liaison simple, un atome de soufre ou un groupe alkylidène possédant de 1 à 4 atomes de carbone, $R_2$ et $R_3$, qui peuvent être identiques ou différents, représentent chacun un atome d'hydrogène ou un groupe alcoyle possédant de 1 à 8 atomes de carbone, M est un atome de métal mono-, di- ou trivalent, et n est un entier allant de 1 à 3.

**11.** La composition d'un polymère de propylène selon la Revendication 10, dans laquelle $R_1$ est un radical méthylène, et $R_2$ et $R_3$ sont chacun un radical tert-butyle.

**12.** La composition d'un polymère de propylène selon la Revendication 10, dans laquelle ledit composé de phosphate est le 2,2'-méthylène-bis(4,6-di-tert-butylphényle)phosphate de sodium.

**13.** La composition d'un polymère de propylène selon l'une quelconque des revendications 10 à 12, dans laquelle est incorporée une charge inorganique.

**14.** La composition d'un polymère de propylène selon la Revendication 13, dans laquelle ladite charge inorganique est au moins un des composés choisis parmi le talc, le mica, l'argile, la wollastonite, une zéolithe, l'amiante, le carbonate de calcium, l'hydroxyde d'aluminium, l'hydroxyde de magnésium, le sulfate de baryum, le silicate de calcium, la fibre de verre, la fibre de carbone et le titanate de potassium.

**15.** La composition d'un polymère de propylène selon la Revendication 13, dans laquelle ladite charge inorganique est du talc.

**16.** La composition d'un polymère de propylène selon la Revendication 15, dans laquelle la quantité de talc ajoutée est de 3,5 à 25 parties par 100 parties en poids des copolymères séquencés cristallins d'éthylène-propylène.

**17.** La composition d'un polymère de propylène selon la Revendication 15, dans laquelle la quantité de talc ajoutée est de 5,0 à 20 parties par 100 parties en poids des copolymères séquencés cristallins d'éthylène-propylène.

**18.** La composition d'un polymère de propylène selon l'une quelconque des revendications 15 à 17, dans laquelle la granulométrie moyenne des particules de talc n'est pas supérieure à 5$\mu$.